(19) Europäisches Patentamt
European Patent Office
Office européen des brevets

(11) EP 0 488 715 B1

(12) **EUROPEAN PATENT SPECIFICATION**

(45) Date of publication and mention
of the grant of the patent:
**19.02.1997  Bulletin 1997/08**

(51) Int Cl.6: **F16C 32/06**, F16C 33/04

(21) Application number: **91310992.2**

(22) Date of filing: **28.11.1991**

(54) **A porous hydrostatic gas-bearing**

Poröses, gasstatisches Lager

Palier hydrostatique poreux à gaz

(84) Designated Contracting States:
**DE FR GB**

(30) Priority: **29.11.1990  JP 325761/90**
**27.03.1991  JP 85835/91**
**27.03.1991  JP 85836/91**
**27.03.1991  JP 85838/91**

(43) Date of publication of application:
**03.06.1992  Bulletin 1992/23**

(73) Proprietor: **NGK INSULATORS, LTD.**
**Nagoya City Aichi Pref. (JP)**

(72) Inventors:
• **Ono, Katsuhiro**
**Nagoya City, Aichi Prefecture (JP)**
• **Kitamura, Kazumasa**
**Ichinomiya City, Aichi Prefecture (JP)**
• **Misawa, Hidenobu**
**Toyoake City, Aichi Prefecture (JP)**

(74) Representative: **Paget, Hugh Charles Edward et al**
**MEWBURN ELLIS**
**York House**
**23 Kingsway**
**London WC2B 6HP (GB)**

(56) References cited:
EP-A- 0 061 016     DE-A- 3 230 232
US-A- 2 697 645

• **TRANSACTIONS OF THE AMERICAN SOCIETY OF MECHANICAL ENGINEERS, SERIE F, JOURNAL OF LUBRICATION TECHNOLOGY vol. 96, no. 3, July 1974, NEW YORK US pages 354 - 369 P.R.K. MURTI 'Analysis of Externally Pressurized Gas Porous Bearings'**
• **Druckluftgespeiste Radiallager aus porösem Werkstoff, J. Schmidt, Industrieanzeiger 92. Jahrgang, Nr.80, 25.09.1970, p. 1892 - 1893**
• **Aerostatische Radiallager aus porösem Werkstoff, J.Schmidt, wt - Zeitschrift für industrielle Fertigung, 61 (1971) p. 616 - 617**
• **Characteristics of Externally Pressurized Porous Ceramic Air Bearings, T. Koyama, T. Aoyama and I. Inasaki, Trans. Jpn. Soc. Mech. Eng.,Ser. C, 55, 511, p. 750 -756 (1989)**

## Description

This invention relates to hydrostatic gas-bearings using a porous ceramic bushing, particularly, porous gas-bearings with whirl stability and high static stiffness.

A slicing machine provided with gas-bearings is a machine tool used for cutting, grooving or the like of ceramics. In such a slicing machine, the axle of the grinding wheel is driven to rotate at a high speed with the number of revolutions adapted for machining the objective body. The axle journal is lubricated by gas fed to the gas-bearing at a maximum gas-supply pressure easily obtainable in-plant, in order to obtain a high static stiffness. A bearing according to the present invention is suited for use as a bearing which requires such a high speed of rotation of the journal with whirl stability and high static stiffness.

There have been hitherto known porous, hydrostatic gas-bearings having a porous body arranged as a bushing thereof. Pressurized air is fed through the porous bushing to the radial clearance on the inner surface of the bushing to form an air layer which supports and lubricates the rotating journal. Such systems are described in "Druckluftgespeiste Radiallager aus porösem Werkstoff", J Schmidt, Industriegeanzeiger 92. Jahrgang Nr. 80, 25.09.1970, pp 1892-1893, and "Aerostatische Radiallager aus porösem Werkstoff", J. Schmidt, wt-Zeitschrift für industrielle Fertigung, 61 (1971), pp 616-617.

As a material for this porous body, porous sintered metals, carbons or ceramics have so far been employed.

Sintered pads for a thrust bearing having a permeability value between $10^{-16}$ $m^2$ and $10^{-20}$ $m^2$ are described in "Analysis of Externally Pressurized Gas Porous Bearings", P.R.K. Murti, Trans. ASME, Series F, Journal of Lubrication Technology, vol. 96, no.3, July 1974, pp. 354-359.

Further a porous ceramic material for an air bearing with a permeability of $1.09 \times 10^{-13}$ $m^2$ is described in "Characteristics of Externally Pressurized Porous Ceramics Air Bearings", T. Koyama, T. Aoyama and I. Inasaki, Trans. Jpn. Soc. Mech. Eng., Ser. C, 55, 511, pp. 750-756 (1989).

In the case where, inter alia, porous sintered metals or porous carbons are employed, there has been presented a problem such that, since the porous texture of the bushing surface is filled up during finishing, hydrostatic gas-bearings with whirl stability and high static stiffness cannot be obtained unless a re-finish is conducted which requires quite a lot of man-hours.

In this respect, in the case where porous ceramics are employed, the above problem of texture filling-up will not arise. However, as is disclosed in, for example, Trans. of JSME, C-Ed., Vol. 55, No. 511, "Load-bearing characteristics of hydrostatic air-bearings using porous ceramics", the hydrostatic gas-bearings using a porous ceramic bushing have whirl instability due to generation of pneumatic hammering and can be stabilized only under limited conditions. Thus, another problem has been posed such that the hydrostatic gas-bearings with high static stiffness and whirl stability cannot be practically mass-produced.

The present invention aims at least partly to obviate the above-described problems and to provide porous, hydrostatic gas-bearings with whirl stability and high static stiffness, which have a structure suitable for mass-production.

A porous, hydrostatic gas-bearing with whirl stability and static stiffness according to the present invention comprises a porous ceramic bushing supporting and surrounding a rotating journal with a bearing clearance, through which bushing a pressurized gas is fed into the clearance to lubricate the rotating journal, characterised in that a porous ceramic material used as the bushing has a gas permeability satisfying $K \geqq 10^{-17}$ and also at least one of the following relationships (1), (2) and (3):

$$K \leqq 7 \times 10^{-15} \qquad (1),$$

$$q \leqq 2.07 \times 10^{-13} P_1^{\ 2} - 6.84 \times 10^{-9} P_1 - 6.9 \times 10^{-3} \qquad (2)$$

and

$$Y < 5 \qquad (3),$$

wherein K ($m^2$) is a gas permeating rate defined by the following equation (4),

$$K = \frac{2\mu P_2 tQ}{A\,(P_1^2 - P_2^2)} \qquad (4),$$

q ($m^3/s \cdot m^2$) is a mass rate of gas flow per unit area, Q/A, and Y is a gas permeability coefficient (dimensionless) defined by the following equation (5),

$$Y = \frac{12Kr^2}{tC_r^3} \qquad (5)$$

where,

A : inner surface area of the bushing ($m^2$),
t : wall thickness of the bushing (m),
r : radius of the journal (m),
$C_r$: bearing clearance (m),
$P_1$: supply pressure of pressurized gas applied to the outer peripheral surface of the bushing (Pa).
$P_2$: pressure of the gas exhausting from the inner peripheral surface of the bushing (Pa),
$\mu$ : viscosity coefficient of the gas (Pa·s), and
Q : mass rate of gas flow ($m^3/s$).

The gas permeating rate K used throughout the specification and claims of this application is a gas permeating rate of ceramics based upon Darcy's law, which is determined by the following procedure:

A compressed gas having a pressure of $P_1$ (Pa.) is applied onto one surface of a porous ceramic sample of area A ($m^2$) and thickness t (m), and a mass rate of gas flow Q ($m^3/s$) passing through across the sample and a pressure $P_2$ (Pa.) of the exhaust gas are measured. The mass rate of gas flow per unit area, q ($m^3/s \cdot m^2$), is represented by Q/A and gas permeating rate K ($m^2$) is found by the above equation (4).

In the above-described structure, the inventors have found that if the gas permeability of the porous ceramic bushing satisfies at least one of the above relationships (1), (2) and (3), as is clear from the examples hereinafter described, hydrostatic gas-bearing with whirl stability and high static stiffness which generate no pneumatic hammering under usual use conditions can be obtained irrespective of other characteristics of the porous ceramic.

Particularly when the ceramic bushing has a relatively small wall thickness, such as less than about 10 mm, the relationship (1) can more satisfactorily apply.

The lower limit of the gas permeating rate K is $10^{-17}$ $m^2$. If K is less than $10^{-17}$ $m^2$ such a ceramic bushing, in most cases, may not be suited for use in gas-bearings due to a too low static stiffness.

Further, when the gas permeating rate K of the porous ceramic bushing is within the range $7.3 \times 10^{-16}$ $m^2$ and $7 \times 10^{-15}$ $m^2$, an appropriate rotating speed of the journal up to 30,000 r.p.m. which is practically adoptable without generating pneumatic hammering can be found from the following relationship (6):

$$R \leqq -30,538 \log K - 432,238 \qquad (6)$$

wherein R is a rotating speed (r.p.m.) of the journal. When K is less than $7.3 \times 10^{-16}$ $m^2$, the journal can rotate at more than 30,000 r.p.m. with whirl stability.

Alternatively, when the ceramic bushing has a relatively large wall thickness, such as more than about 20 mm, the relationship (2) can more satisfactorily apply.

The lower limit of the mass rate of gas flow per unit area q is not necessarily defined. However, if q is less than $10^{-3}(2.07 \times 10^{-13}P_1^2 - 6.84 \times 10^{-9}P_1 - 6.9 \times 10^{-3})$ $m^3/s \cdot m^2$, such a ceramic bushing, in most cases, may not be suited for use in gas-bearings due to a too low static stiffness, so that it is preferred to define the lower limit to be $10^{-3}(2.07 \times 10^{-13}P_1^2 - 6.84 \times 10^{-9}P_1 - 6.9 \times 10^{-3})$ $m^3/s \cdot m^2$.

Further, if the mass rate of gas flow per unit area q is $2.2 \times 10^{-14}P_1^2 + 1.79 \times 10^{-8}P_1 - 3.45 \times 10^{-3}$ or less, the bearings remain stable until the rotating speed reaches 30,000 r.p.m. which is the maximum number of revolutions that can be experimentally confirmed.

With respect of the gas permeability coefficient Y, the relationship (3) may be generally applicable irrespective of the size of the bushing.

The lower limit of the gas permeability coefficient Y is not necessarily defined. However, if Y is less than 0.05, such a ceramic bushing, in most cases, also may not be suited for use in gas-bearings due to a too low static stiffness, so that it is preferred to define the lower limit be 0.05.

Further, when the gas permeability coefficient Y is within the range between 1 and less than 5, an appropriate rotating speed R of the journal up to 30,000 r.p.m. which is practically adoptable without generating hammering can be found from the following relationship (7):

$$R \leq 2{,}090Y^2 - 17{,}318Y + 34{,}808 \qquad (7)$$

wherein R is a rotating speed (r.p.m.) of the journal. When Y is less than 1, the journal can rotate at more than 30,000 r.p.m. with whirl stability.

The above and other optional features and advantages of the present invention will become more apparent from reading the following description of the preferred embodiments taken in connection with the accompanying drawings, wherein:

Fig. 1 is a longitudinal sectional view showing the structure of an embodiment of the porous, hydrostatic gas-bearing according to the invention;

Fig. 2 is a longitudinal sectional view illustrating a method for investigating generation of pneumatic hammering;

Fig. 3 is a graph showing the relation between the gas permeating rate and the maximum number of revolutions for whirl stability;

Fig. 4 is a graph showing the relation between the mass rate of gas flow per unit area and the maximum number of revolutions for whirl stability;

Fig. 5 is a graph showing the relation between the gas permeability coefficient and the maximum number of revolutions for whirl stability;

Fig. 6 is a graph showing the relation between the moulding pressure and the gas permeating rate;

Fig. 7 is a graph showing the relation between the firing temperature and the gas permeating rate; and

Fig. 8 is a graph showing the relation between the gas supply pressure to a porous zirconia and the quantity of the mass rate of gas flow.

The inventors have found that in usual processes for manufacturing a sintered body comprising the steps of preparing a starting powder, moulding and firing, a porous ceramic having a desired gas permeability can be readily obtained with good reproducibility by selecting an appropriate moulding pressure at the moulding step or selecting an appropriate firing temperature at the firing step.

Additionally, as already described hereinabove, in the present invention, insofar as the porous ceramics have a gas permeability satisfying at least one of the above-mentioned relationships (1), (2) and (3), those ceramics are usable irrespective of other characteristics. However, in order to attain the above gas permeability, the porous ceramics are preferred to have characteristics usually within the following ranges:

an average micropore diameter of 0.5-10 μm;
an open void percentage of 10-30%;
a volume of micropores of 0.02-0.08 cc/g;
a water absorbency of 2-8%; and
an apparent density of 2-5 g/cc.

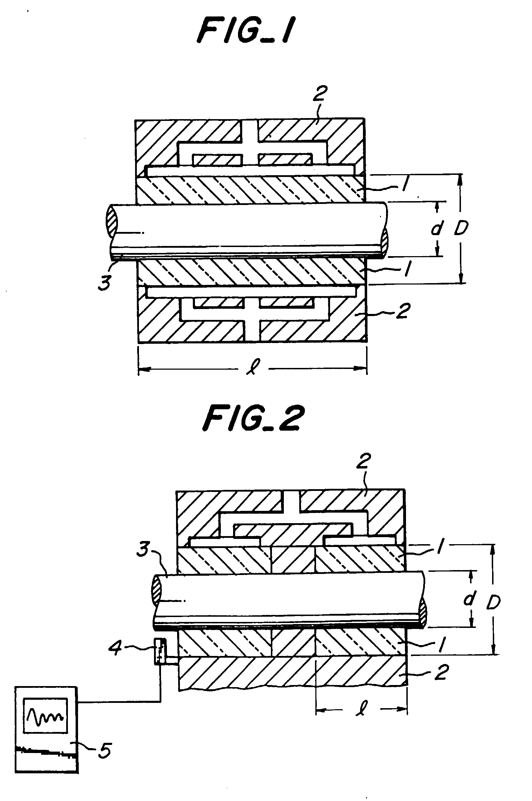

Fig. 1 is a longitudinal sectional view showing the structure of an embodiment of the porous, hydro-static gas-bearing according to the invention. In Fig. 1, the numeral 1 is a porous ceramic bushing having a predetermined gas permeability, the numeral 2 is a gas feed block for feeding a gas such as air or the like to the porous ceramic bushing 1, and the numeral 3 is a journal to be supported. The size of the bearing for usual axle journals of the grinding wheel of slicing machines is generally: d=25-60 mm, D=30-80 mm and 1=25-60 mm. The journal 3 is mounted on the porous, hydrostatic gas-bearing having the above-described structure and supported on the inner peripheral surface of the porous ceramic bushing 1 leaving a bearing clearance of 5-20 μm. Then, the journal 3 is driven to rotate while a gas with a predetermined pressure is fed through the gas feed block 2 into the bearing clearance at the interface of the bushing and the journal.

The porous ceramic bushing 1 can be obtained by a usual manufacturing process of ceramics, namely, comprising the steps of preparing a starting powder having a predetermined composition, moulding the prepared starting powder into a green bushing and firing the moulded greenware. The porous ceramic bushing 1 having a predetermined gas permeability can be obtained, as described hereinafter, by selecting an appropriate moulding pressure at the moulding step and/or an appropriate firing temperature at the firing step in the above process. Additionally, the porous ceramic bushing 1 is preferred to have a uniform pore distribution and be composed of a material which is resistant to surface texture filling-up during finishing. A porous zirconia, porous alumina, porous aluminium nitride, porous silicon carbide and porous silicon nitride are preferably employed.

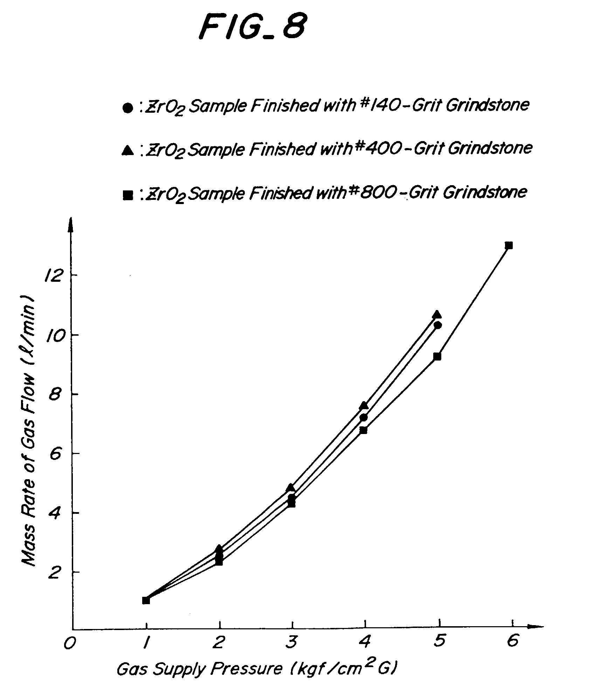

As an example, Fig. 8 shows a relation between the gas supply pressure to porous zirconia and the mass rate of gas flow. The fact that the porous surface texture of the porous zirconia is not filled-up during finishing is proved by the mass rate of gas flow that was kept constant even when the grindstone used to finish the surface of the zirconia sample was changed.

Fig. 2 shows an apparatus used for finding a threshold for generation of pneumatic hammering, wherein a practical porous, hydrostatic gas-bearing supports an axle journal. The bushing 1 has a dimension in the ranges of: d=50-60 mm, D=55-75 mm and 1=50-60 mm. In the apparatus shown in Fig. 2, a porous, hydrostatic gas-bearing having a structure similar to that of Fig. 1 is provided with a distance-measuring sensor, an acceleration pickup 4 and an FFT analyzer 5. Thus, vibration is measured when the journal rotates at various numbers of revolutions. When a frequency component asynchronous with the number of revolutions generated, pneumatic hammering was regarded as generated.

Additionally, in Fig. 1, the maximum supply pressure of the gas fed from the gas feed block 2 was 7 kgf/cm$^2$ G. This was the maximum pressure readily available and it is desirable to have the maximum supply pressure as high as possible because the static stiffness of the bearing increased with increasing gas supply pressure.

The present invention will be explained hereinafter in more detail by way of example.

Example 1

Six kinds of zirconia bushings A-F having a ratio of the outside diameter and the length of 1 were manufactured according to the manufacturing conditions shown in Table 1.

Table 1

| Mfg. Conditions | A | B | C | D | E | F |
|---|---|---|---|---|---|---|
| Moulding pressure (ton/cm$^2$) | 2.5 | 2.5 | 1.0 | 2.5 | 4.5 | 6.5 |
| Firing temperature (°C) | 1550 | 1550 | 1500 | 1550 | 1590 | 1590 |
| Firing time (hour) | 5 | 5 | 9 | 7 | 5 | 5 |

The above obtained bushings had the characteristics shown in Table 2.

Table 2

| Characteristics | A | B | C | D | E | F |
|---|---|---|---|---|---|---|
| Average pore diameter (μm) | 1.49 | 1.55 | 1.44 | 1.57 | 1.49 | 1.30 |
| Void volume ($10^{-4}$ cc/g) | 526 | 648 | 615 | 512 | 412 | 353 |
| Open void percentage (%) | 23.1 | 27.0 | 29.9 | 15.0 | 18.7 | 16.8 |
| Water absorbency (%) | - | 6.70 | - | - | 4.18 | 3.68 |
| Density of product (g/cc) | 3.47 | 3.43 | - | - | 3.62 | 3.71 |

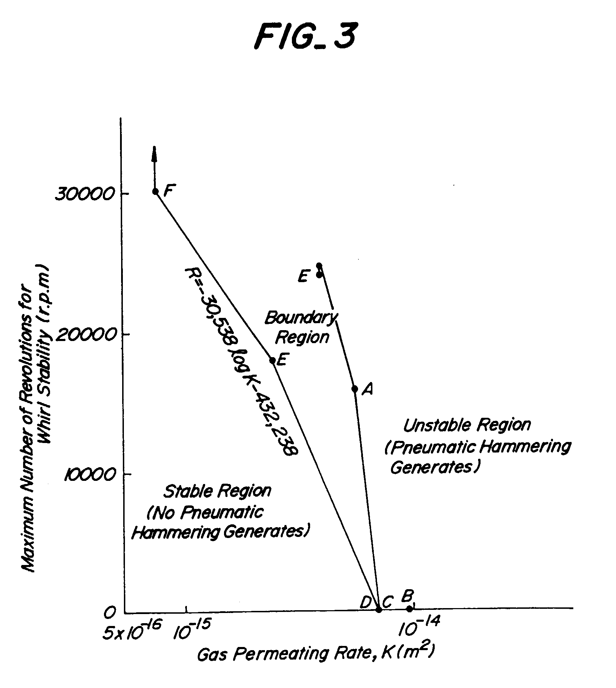

With a practical apparatus as shown in Fig. 2, the gas permeating rate K of the porous ceramic bushings A-F was varied and the rotating speed of the journal at which pneumatic hammering began to generate was found and plotted. Then, the result shown in Fig. 3 was obtained.

As is clear from Fig. 3, insofar as the gas permeating rate K is $7\times10^{-15}$ m$^2$ or less, a porous, hydrostatic gas-bearing with whirl stability and no pneumatic hammering generated can be obtained. Further, if the gas permeating rate is $10^{-15}$ m$^2$ or less, the apparatus remains stable until a rotating speed of 30,000 r.p.m. has been reached which is the maximum number of revolutions that can be experimentally confirmed. Thus, it has been found that more stabilized porous gas-bearings can be obtained when the gas permeating rate is further decreased. Alternatively, the static stiffness practically measured 15 kgf/μm or more all over the range of the gas permeating rate of $7\times10^{-15}$ m$^2$ or less.

Example 2

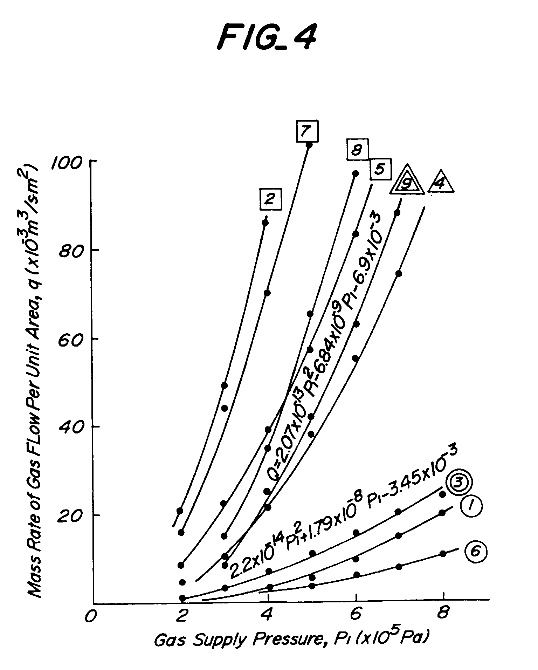

With a practical apparatus as shown in Fig. 2, the mass rate of gas flow per unit area, g, of the porous ceramic bushings A-F obtained in Example 1 was varied and the number of revolutions at which pneumatic hammering began to generate was found and plotted. Then, the result shown in Fig. 4 was obtained.

In Fig. 4, the numerals show Run No. and the frames enclosing the numerals mean as follows:

□: a plot of the mass rate of gas flow per unit area of the bushing versus the gas supply pressure when a frequency component asynchronous with the number of revolutions was generated at less than 2,000 r.p.m.;

$\Delta$: a plot of the mass rate of gas flow per unit area of the bushing versus the gas supply pressure when a frequency component asynchronous with the number of revolutions was generated at between 2,000 r.p.m. and less than 30,000 r.p.m.; and

$\bigcirc$: a plot of the mass rate of gas flow per unit area of the bushing versus the gas supply pressure when no frequency component asynchronous with the number of revolutions was generated even at 30,000 r.p.m.;

and further the double frames show thresholds.

As is clear from Fig. 4, insofar as the mass rate of gas flow per unit area q is $2.07 \times 10^{-13}P_1^2 - 6.84 \times 10^{-9}P_1 - 6.9 \times 10^{-3}$ or less, a porous, hydrostatic gas-bearing with whirl stability and no pneumatic hammering generated can be obtained. Further, if the mass rate of gas flow per unit area q is $2.2 \times 10^{-14}P_1^2 + 1.79 \times 10^{-8}P_1 - 3.45 \times 10^{-3}$ or less, the apparatus remains stable until 30,000 r.p.m. has been reached which is the maximum number of revolutions that can be experimentally confirmed.

Alternatively, the static stiffness practically measures 15 kgf/$\mu$m or more all over the range satisfying the relationship (2).

### Example 3

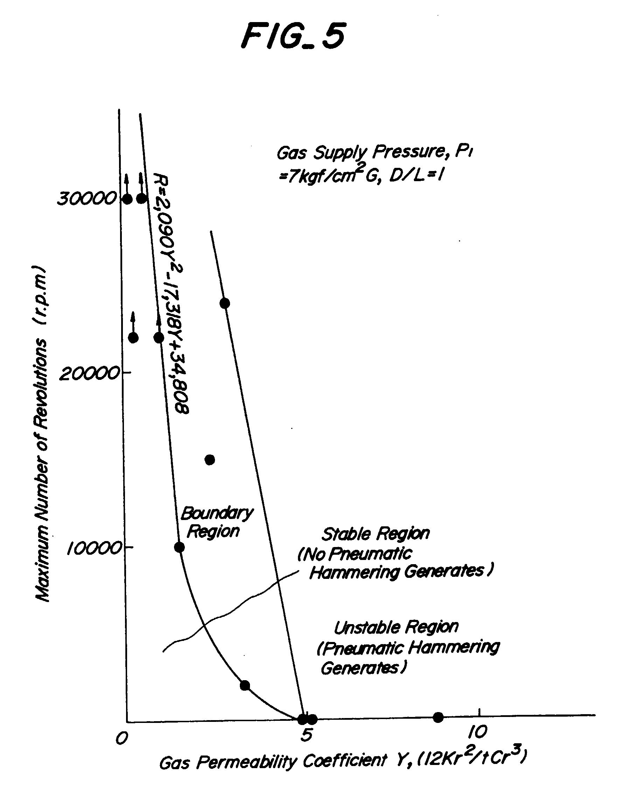

With a practical apparatus as shown in Fig. 2, the gas permeability coefficient Y of the porous ceramic bushings A-F obtained in Example 1 was varied and the number of revolutions at which pneumatic hammering began to generate was found and plotted. Then, the result shown in Fig. 5 was obtained.

As is clear from Fig. 5, insofar as the gas permeability coefficient Y is 5 or less, a porous, hydrostatic gas-bearing with whirl stability and no pneumatic hammering to generate can be obtained. Further, if the gas permeability coefficient Y is 1 or less, the apparatus remains stable until 30,000 r.p.m. has been reached which is the maximum number of revolutions that can be experimentally confirmed. Thus, it has been found that more stabilized porous gas-bearings can be obtained.

Alternatively, the static stiffness practically measured 15 kgf/$\mu$m or more all over the range of the gas permeability coefficient of 5 or less.

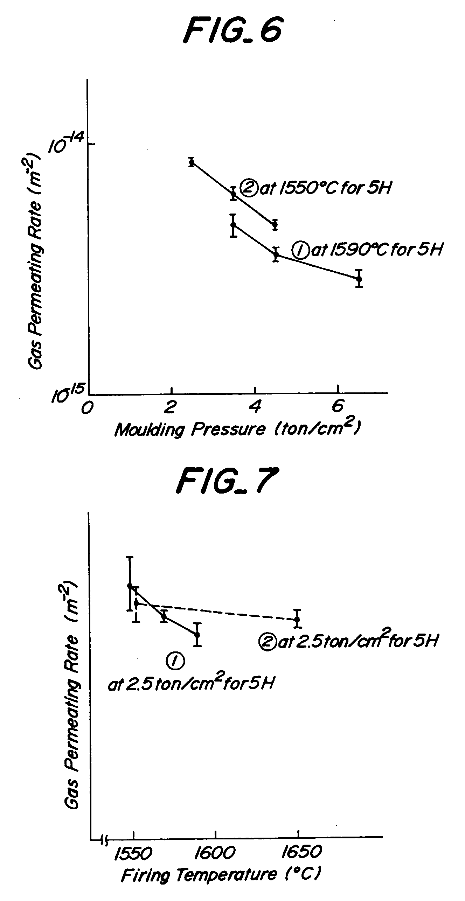

Further, in order to investigate influences upon the gas permeability of the moulding pressure and firing temperature in the manufacture of the porous ceramic bushing 1, porous ceramics having the same composition were manufactured under the same conditions except that the moulding pressure and firing temperature were varied. The gas permeability of the resulting products was determined. Figs. 6 and 7 show the change of the air permeating rate K with changing moulding pressure at the moulding step and firing temperature at the firing step, respectively. Similarly, the mass rate of gas flow per unit area q and gas permeability coefficient Y were able to be controlled by changing the moulding pressure and firing temperature. Thus, this process is found to be most suited for obtaining the porous ceramics having a predetermined gas permeability according to the present invention.

As is clearly understood from the above detailed explanation, insofar as only the gas permeability of the porous ceramic is controlled to satisfy at least one of the above-described relationships (1), (2) and (3), porous, hydrostatic gas-bearings using such a porous ceramic in the bushing thereof can exhibit whirl stability and high static stiffness without pneumatic hammering being generated. Further, the gas permeability of the above-described ceramic bushing can be controlled by appropriately selecting the moulding pressure and firing temperature, so that porous ceramic bushings having a predetermined gas permeability can be readily obtained.

## Claims

1. A porous, hydrostatic gas-bearing with whirl stability and static stiffness comprising a porous ceramic bushing supporting and surrounding a rotating journal with a bearing clearance, through which bushing a pressurized gas is fed into the clearance to lubricate the rotating journal, characterised in that a porous ceramic material used as the bushing has a gas permeability satisfying $K \geqq 10^{-17}$ and also at least one of the following relationships (1), (2) and (3):

$$K \leqq 7 \times 10^{-15} \qquad (1),$$

$$q \leqq 2.07 \times 10^{-13}P_1^2 - 6.84 \times 10^{-9}P_1 - 6.9 \times 10^{-3} \qquad (2)$$

and

$$y < 5 \tag{3},$$

wherein K (m$^2$) is a gas permeating rate defined by the following equation (4),

$$K = \frac{2\mu P_2 tQ}{A\,(P_1^2 - P_2^2)} \tag{4},$$

q (m$^3$/s·m$^2$) is a mass rate of gas flow per unit area and Y is a gas permeability coefficient defined by the following equation (5),

$$Y = \frac{12 K r^2}{t C_r^3} \tag{5}$$

where,

A :     inner surface area of the bushing (m$^2$),
t :     wall thickness of the bushing (m),
r :     radius of the journal (m),
$C_r$:     bearing clearance (m),
$P_1$:     supply pressure of pressurized gas applied to the outer peripheral surface of the bushing (Pa).
$P_2$:     pressure of the gas exhausting from the inner peripheral surface of the bushing (Pa),
$\mu$ :     viscosity coefficient of the gas (Pa·s), and
Q :     mass rate of gas flow (m$^3$/s).

2. The gas-bearing according to claim 1, characterised in that
said bearing is used at a rotating speed (R r.p.m.) of the journal within the range defined by the following relationship (6):

$$R \leqq -30{,}538 \log K - 432{,}238. \tag{6}$$

3. The gas-bearing according to claim 1, characterised in that said porous ceramic material has a mass rate of gas flow per unit area (q m$^3$/s·m$^2$) satisfying the following relationship:

$$10^{-3}(2.07 \times 10^{-13} P_1{}^2 - 6.84 \times 10^{-9} P_1 - 6.9 \times 10^{-3})$$

$$\leqq q \leqq 2.07 \times 10^{-13} P_1{}^2 - 6.84 \times 10^{-9} P_1 - 6.9 \times 10^{-3}.$$

4. The gas-bearing according to claim 3, characterised in that said porous ceramic material has a mass rate of gas flow per unit area (q m$^3$/s·m$^2$) satisfying the following relationship:

$$10^{-3}(2.07 \times 10^{-13} P_1{}^2 - 6.84 \times 10^{-9} P_1 - 6.9 \times 10^{-3})$$

$$\leqq q \leqq 2.2 \times 10^{-14} P_1{}^2 - 1.79 \times 10^{-8} P_1 - 3.45 \times 10^{-3}.$$

5. The gas-bearing according to claim 1, characterised in that said porous ceramic material has a gas permeability coefficient (Y) between 0.05 and less than 5 and that said bearing is used at a rotating speed (R r.p.m.) of the journal within the range defined by the following relationship (7):

$$R \leqq 2,090Y^2 - 17,318Y + 34,808. \tag{7}$$

**Patentansprüche**

1. Poröses hydrostatisches Gaslager mit Wirbelstabilität und statischer Steifigkeit, umfassend eine poröse Keramikmuffe bzw. -buchse bzw. -hülse, die einen rotierenden Achsstummel bzw. -zapfen bzw. Lagerzapfen mit einem Lagerspiel trägt bzw. abstützt und umgibt, durch welche Muffe ein komprimiertes Gas in das Spiel geleitet wird, um den rotierenden Achsstummel zu schmieren, dadurch gekennzeichnet, daß das für die Muffe verwendete poröse Keramikmaterial eine Gasdurchlässigkeit aufweist, für die $K \geq 10^{-17}$ sowie wenigstens eine der folgenden Beziehungen (1), (2) und (3) gilt:

$$K \leq 7 \times 10^{-15} \tag{1}$$

$$q \leq 2,07 \times 10^{-13} P_1^{\ 2} - 6,84 \times 10^{-9} P_1 - 6,9 \times 10^{-3} \tag{2}$$

und

$$Y < 5 \tag{3},$$

worin $K$ ($m^2$) eine durch folgende Gleichung (4) definierte Gasdurchdringungsrate ist:

$$K = \frac{2\mu P_2 tQ}{A(P_1^{\ 2} - P_2^{\ 2})} \tag{4},$$

$q$ ($m^3/s\cdot m^2$) eine Mengenrate des Gasstroms pro Flächeneinheit ist, und $Y$ ein durch die folgende Gleichung (5) definierter Gasdurchlässigkeitskoeffzient ist,

$$Y = \frac{12Kr^2}{tC_r^{\ 3}} \tag{5}$$

worin

A: die innere Oberfläche der Muffe ($m^2$)

t: die Wandstärke der Muffe (m),

r: der Radius des Achsstummels (m),

$C_r$: das Lagerspiel (m),

$P_1$: der auf die äußere Umfangsfläche der Muffe ausgeübter Zufuhrdruck des komprimierten Gases (Pa),

$P_2$: der Druck des von der inneren Umfangsfläche der Muffe austretenden bzw. abgesaugten Gases (Pa),

$\mu$: der Viskositätskoeffizient des Gases (Pa·s) und

Q: die Mengenrate des Gasstroms ($m^3/s$)

sind.

**2.** Gaslager nach Anspruch 1, dadurch gekennzeichnet, daß
das Lager bei einer Rotationsgeschwindigkeit (R, U/min) des Achsstummels bzw. -zapfens bzw. Lagerzapfens im durch die folgende Beziehung (6) definierten Bereich eingesetzt wird:

$$R \leq -30,538 \, logK - 432,238. \tag{6}$$

**3.** Gaslager nach Anspruch 1, dadurch gekennzeichnet, daß das poröse Keramikmaterial eine Mengenrate des Gasstroms pro Flächeneinheit (q, m$^3$/s·m$^2$) aufweist, die folgender Beziehung entspricht:

$$10^{-3} \, (2,07 \times 10^{-13} P_1{}^2 - 6,84 \times 10^{-9} P_1 - 6,9 \times 10^{-3})$$

$$\leq q \leq 2,07 \times 10^{-13} P_1{}^2 - 6,84 \times 10^{-9} P_1 - 6,9 \times 10^{-3}.$$

**4.** Gaslager nach Anspruch 3, dadurch gekennzeichnet, daß das poröse Keramikmaterial eine Mengenrate des Gasstroms pro Flächeneinheit (q, m$^3$/s·m$^2$) aufweist, der folgender Beziehung entspricht:

$$10^{-3}(2,07 \times 10^{-13} P_1{}^2 - 6,84 \times 10^{-9} P_1 - 6,9 \times 10^{-3})$$

$$\leq q \leq 2,2 \times 10^{-14} P_1{}^2 - 1,79 \times 10^{-8} P_1 - 3,45 \times 10^{-3}.$$

**5.** Gaslager nach Anspruch 1, dadurch gekennzeichnet, daß das poröse Keramikmaterial einen Gasdurchlässigkeitskoeffizienten (Y) zwischen 0,05 und weniger als 5 aufweist und das Lager bei einer Rotationsgeschwindigkeit (R, U/min) des Achsstummels bzw. -zapfens bzw. Lagerzapfens im durch folgende Beziehung (7) definierten Bereich eingesetzt wird:

$$R \leq 2,090Y^2 - 17,318Y + 34,808. \tag{7}$$

**Revendications**

**1.** Palier hydrostatique poreux à gaz avec une stabilité tourbillonnaire et une rigidité statique comportant une douille poreuse en céramique supportant et entourant un tourillon en rotation avec un jeu de palier, douille à travers laquelle un gaz sous pression est introduit dans le jeu afin de lubrifier le tourillon en rotation, caractérisé en ce qu'une matière céramique poreuse utilisée pour la douille a une perméabilité au gaz répondant à
$K \geqq 10^{-17}$ et également à au moins une des relations (1), (2) et (3) suivantes:

$$K \leqq 7 \times 10^{-15} \tag{1},$$

$$q \leqq 2,07 \times 10^{-13} P_1{}^2 - 6,84 \times 10^{-9} P_1 - 6,9 \times 10^{-3} \tag{2}$$

et

$$Y < 5 \tag{3},$$

où K (m2) est un taux de perméation au gaz défini par l'équation (4) suivante,

$$K = \frac{2\mu P_2 tQ}{A \, (P_1{}^2 - P_2{}^2)} \tag{4},$$

q (m³/s.m²) est un taux massique du flux de gaz par unité de surface et Y est un coefficient de perméabilité au gaz défini par l'équation suivante (5),

$$Y = \frac{12Kr^2}{tC_r^3} \qquad (5)$$

où,

A : zone de surface intérieure de la douille (m²),
t : épaisseur de paroi de la douille (m),
r : rayon de tourillon (m),
$C_r$ : jeu de palier (m),
$P_1$ : pression d'alimentation du gaz sous pression appliqué à la surface périphérique extérieure de la douille (Pa).
$P_2$ : pression du gaz sortant de la surface périphérique intérieure de la douille (Pa),
μ : coefficient de viscosité du gaz (Pa.s), et
Q : taux massique du flux de gaz (m³/s).

2. Palier à gaz selon la revendication 1, caractérisé en ce que ledit palier est utilisé à une vitesse de rotation (tr/mn) du tourillon dans la plage définie par la relation (6) suivante :

$$R \leqq -30,538 \log K - 432,238. \qquad (6)$$

3. Palier à gaz selon la revendication 1, caractérisé en ce que ladite matière céramique poreuse a un taux massique du flux de gaz par unité de surface (q m³/s.m²) répondant à la relation suivante :

$$10^{-3}(2,07 \times 10^{-13}P_1^2 - 6,84 \times 10^{-9}P_1 - 6,9 \times 10^{-3})$$

$$\leqq q \leqq 2,07 \times 10^{-13}P_1^2 - 6,84 \times 10^{-9}P_1 - 6,9 \times 10^{-3}.$$

4. Palier à gaz selon la revendication 3, caractérisé en ce que ladite matière céramique poreuse a un taux massique du flux de gaz par unité de surface (q m³/s.m²) répondant à la relation suivante :

$$10^{-3}(2,07 \times 10^{-13}P_1^2 - 6,84 \times 10^{-9}P_1 - 6,9 \times 10^{-3})$$

$$\leqq q \leqq 2,2 \times 10^{-14}P_1^2 - 1,79 \times 10^{-8}P_1 - 3,45 \times 10^{-3}.$$

5. Palier à gaz selon la revendication 1, caractérisé en ce que ladite matière céramique poreuse a un coefficient de perméabilité au gaz (Y) compris entre 0,05 et une valeur inférieure à 5, et en ce que ledit palier est utilisé à une vitesse de rotation (tr/mn) du tourillon dans la plage définie par la relation (7) suivante :

$$R \leqq 2,090Y^2 - 17,318Y + 34,808. \qquad (7)$$

# FIG_1

# FIG_2

# FIG. 3

# FIG_4

# FIG_5

## FIG. 6

Gas Permeating Rate ($m^{-2}$) vs Moulding Pressure (ton/$cm^2$)
② at 1550°C for 5H
① at 1590°C for 5H

## FIG. 7

Gas Permeating Rate ($m^{-2}$) vs Firing Temperature (°C)
② at 2.5 ton/$cm^2$ for 5H
① at 2.5 ton/$cm^2$ for 5H

# FIG_8

● : $ZrO_2$ Sample Finished with #140-Grit Grindstone

▲ : $ZrO_2$ Sample Finished with #400-Grit Grindstone

■ : $ZrO_2$ Sample Finished with #800-Grit Grindstone

Graph: Mass Rate of Gas Flow ($\ell/min$) versus Gas Supply Pressure ($kgf/cm^2 G$)